# EUROPEAN PATENT SPECIFICATION

(11) **EP 3 837 136 B1**
(45) Date of publication and mention of the grant of the patent: **03.07.2024**
(21) Application number: 19849807.3
(22) Date of filing: 29.04.2019
(51) Int. Cl.: B60P 1/16, B65D 88/60, B60P 1/00, B60P 1/56, B60P 1/30

(54) **EJECTOR TRAILERS**
EJEKTORANHÄNGER
REMORQUES À ÉJECTEUR

(30) Priority: 16.08.2018 AU 2018903000
(43) Date of publication of application: 23.06.2021
(73) Proprietor: Velray Pty Ltd, Mona Vale, New South Wales 2103 (AU)
(72) Inventor: GLAVAN, Velimir R, New South Wales 2103 (AU)
(74) Representative: Arnold & Siedsma
(86) International application number: PCT/AU2019/050382
(87) International publication number: WO 2020/033990

(56) References cited:
- WO-A1-2006/133489
- CA-A1- 2 874 929
- DE-A1- 3 309 647
- DE-U1- 9 302 129
- GB-A- 530 873
- US-A- 5 944 472
- US-A- 5 944 472
- US-A1- 2012 219 393
- US-A1- 2016 121 774
- US-A1- 2017 210 266
- US-A1- 2017 210 267
- US-A1- 2017 211 244

## Description

### FIELD OF THE INVENTION

The present invention relates to ejector trailers. In particular, although not exclusively, the invention relates to systems, methods and apparatus for controlling the ejection of loads from trailers.

### BACKGROUND TO THE INVENTION

Ejector trailers typically comprise a trailer or tray comprising a base, side walls, a front wall and a rear wall or door for holding and transporting loads, in particular loose material such as soil, sand, rocks, aggregate and the like. The rear wall or door is often hinged or otherwise at least partly openable to allow the load to be ejected from the rear of the trailer. Ejection of the load is often achieved by an apron or door that spans the width of the trailer which is moved along the length of the trailer to push the load out through the rear wall or door. Examples of such an ejector trailers are known e.g. from DE 93 02 129 U1, DE 33 09 647 A1 or US 5 944 472 A.

However, some problems exist with known ejector trailers. For example, due to the electrical or hydraulic power required to move the apron and the load, ejector trailers have a limited size and a limited distance the apron or door can be moved. Due to the mass of the load to be moved, large hydraulic systems are required which require large oil reservoirs. Alternatively, large electric motors are required which consume significant electrical power. Another problem with known mechanism is that the material being moved comes into contact with the mechanism for moving the apron, which can foul the mechanism and cause the mechanism to require frequent maintenance. Some mechanisms for moving the apron use belts, which can also require frequent maintenance. Another problem encountered with known ejector trailers is that some ejector trailers can be cumbersome to use in that it can be difficult to control the rate of ejection of the load from the rear of the trailer and/or determine the location in which the load is dumped with any accuracy.

The reference to any prior art in this specification is not, and should not be taken as, an acknowledgement or any form of suggestion that the prior art forms part of the common general knowledge.

### OBJECT OF THE INVENTION

It is preferred object of the present invention to provide an ejector trailer and/or a method that addresses, or at least ameliorates one or more of the aforementioned problems of the prior art and/or provides a useful commercial alternative.

### SUMMARY OF THE INVENTION

**The** present invention relates to ejector trailers, and in particular to ejector trailers with a mechanism for moving an apron in a controlled manner to remove a load from the trailer. The present invention also relates to methods for removing loads from an ejector trailer.

In one form, the invention resides in an ejector trailer comprising:
an apron movable along a length of the trailer;
at least one threaded rod coupled to the apron; and
at least one drive mechanism coupled to the at least one threaded rod to rotate the at least one threaded rod to move the apron along the length of the trailer;

wherein each threaded rod comprises a plurality of threaded rod sections coupled together,
wherein two adjacent threaded rod sections are coupled together with a threadless rod joiner received within hollow portions of the threaded rod sections.

In a further form, the present invention resides in a method comprising:
coupling at least one threaded rod to an apron of an ejector trailer; and
coupling at least one drive mechanism to the at least one threaded rod to rotate the at least one threaded rod to move the apron along the length of the trailer.

Suitably, two, three, four our more threaded rods are coupled to the apron.

Suitably, the ejector trailer comprises four threaded rods with a threaded rod located substantially at or about a periphery of the apron, such as at each corner of the trailer cross-section.

Preferably, each threaded rod is coupled to a respective threaded aperture of the apron.

Preferably, each threaded aperture is provided in a respective apron boss of the apron.

Suitably, the drive mechanism is a hydraulic motor or an electric motor.

Suitably, the threaded rods are rotated in a first direction to move the apron in a rearward direction along the length of the trailer and are rotated in a second direction to move the apron in a forward direction along the length of the trailer. Suitably, the first direction is clockwise and the second direction is anti-clockwise or vice versa.

Suitably, the threaded rods extend along the length of the trailer.

Suitably, the threaded rods are accommodated within a housing such that the threaded rods do not contact a material being transported in the trailer.

Preferably, the trailer is pivotally coupled to an elevating arm driven by a hydraulic ram to move the trailer in a rearward direction and into an out of level or upwardly inclined position in the rearward direction.

Suitably, the rearward displacement and out of level position of the trailer allows for material in the trailer to be unloaded from the trailer to, for example, a conveyer or bulk bag or another trailer in a more controlled manner than the prior art.

Preferably, the rear of the trailer contains an aperture in a base of the trailer and optionally a chute extending from the base of the trailer for the load to exit into the conveyer, or bulk bag or another trailer.

Suitably, each threaded rod comprises a plurality of stabiliser or stay nuts coupled thereto.

Preferably, a number of stabiliser or stay nuts on each threaded rod is greater than a number of the threaded rod sections by a value of 1.

Preferably, each threaded rod comprises a stabiliser or stay nut at a location where two adjacent threaded rod sections are coupled together.

Preferably, the plurality of stabiliser or stay nuts is movable along at least part of at least one of the threaded rod sections as the threaded rod rotates.

Suitably, the plurality of stabiliser or stay nuts is accommodated within and abut against the housing.

Preferably, a stabiliser or stay nut is coupled to at least one of the threaded rod sections on each side of an apron boss of the apron.

Suitably, two stabiliser or stay nuts are provided on a first side of the apron boss and a first one of the two stabiliser or stay nuts provided on the first side of the apron boss remains at a first joining location where two adjacent threaded rod sections are coupled together as the apron moves along the threaded rod past the first joining location.

Suitably, a second one of the two stabiliser or stay nuts provided on the first side of the apron boss remains at a second joining location where two adjacent threaded rod sections are coupled together as the apron moves further along the threaded rod past the second joining location.

Preferably, the housing comprises a slit to permit coupling of the apron boss to the threaded rod and the apron.

Preferably, a seal is provided between the housing and the apron and/or the apron boss that moves with the apron and the apron boss.

Preferably, the plurality of threaded rods is synchronously rotated for even, longitudinal movement of the apron along the trailer.

A further form, which is unclaimed, is an ejector trailer comprising:
a chassis for supporting the trailer;
an elevating arm pivotally coupled at, or towards one end thereof to the chassis and pivotally coupled at, or towards the other, opposite end thereof to a base or underside of the trailer; and
a hydraulic ram pivotally coupled at, or towards one end thereof to the chassis at a position forward of the elevating arm and pivotally coupled at, or towards the other end thereof part way along the elevating arm;
wherein extension of the hydraulic ram causes upward pivoting movement of the elevating arm and movement of the trailer in an upward direction and a rearward direction into an inclined and displaced position.

Further forms and/or features of the present invention will become apparent from the following detailed description.

### BRIEF DESCRIPTION OF THE DRAWINGS

In order that the invention may be readily understood and put into practical effect, reference will now be made to the preferred embodiments of the present invention with reference to the accompanying drawings, wherein like reference numbers refer to identical elements. The drawings are provided by way of example only, wherein:
FIG. 1 is a plan view of an ejector trailer in accordance with an embodiment of the present invention;
FIG. 2 is a side elevation of the ejector trailer shown in FIG. 1 illustrating an original position of the trailer in broken lines and a rearwardly inclined and displaced position of the trailer;
FIG. 3 is a sectional view of the trailer taken along section B-B in FIG. 1;
FIG. 4 is a sectional view taken along section A-A in FIG. 1 illustrating a configuration of threaded rods in relation to the trailer, an apron and a chute;
FIG. 5 is a general flow diagram illustrating a method according to the present invention;
FIG. 6 is plan view of a threaded rod comprising three threaded rod sections, stay nuts and an apron boss coupled to the threaded rod;
FIG. 7 is a sectional view taken along A-A in FIG. 6 showing two of the threaded rod sections, the apron boss, stay nuts and a rod joiner;
FIGS. 8A to 8D are plan views of a pair of threaded rods, respective stay nuts and apron bosses as shown in FIG 6 attached to the apron illustrating a sequence of movement of the apron in the ejector trailer in accordance with the present invention.

It will be appreciated that the accompanying drawings may not have been drawn to scale and/or some features may have been distorted and/or omitted and/or may be schematic for the sake of clarity.

### DETAILED DESCRIPTION OF THE INVENTION

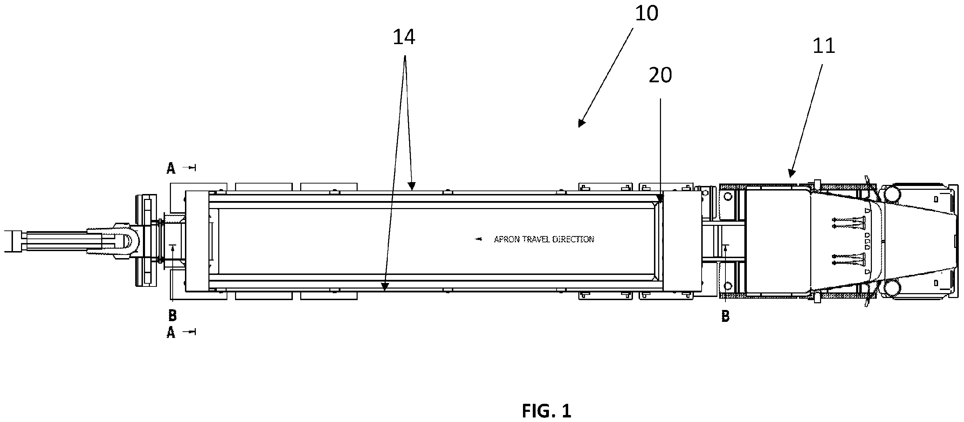

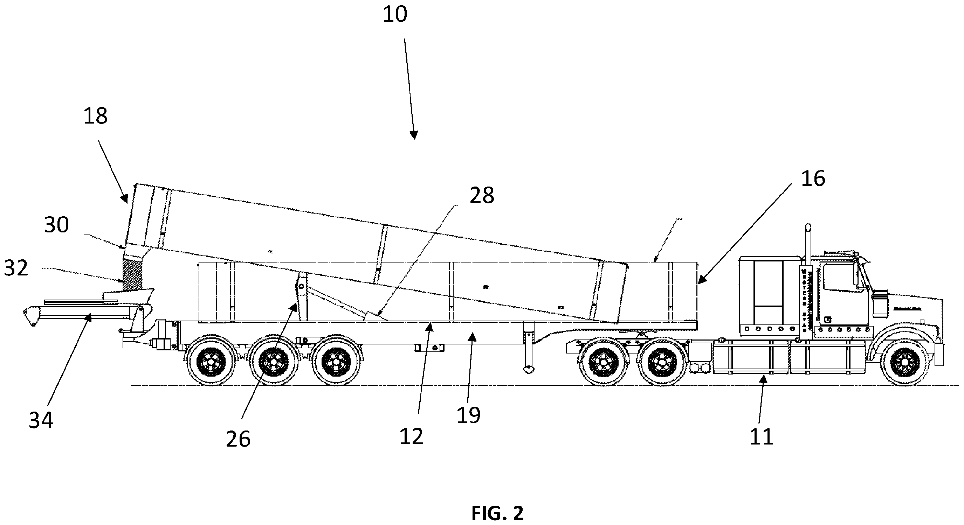

Reference is made to FIG. 1 showing a plan view of an ejector trailer 10 and FIG. 2 showing a side view of the ejector trailer in accordance with an embodiment of the present invention. The ejector trailer 10 is coupled to a prime mover 11 or truck in a conventional manner known in the art. The ejector trailer 10 is used for transporting a load, such as, but not limited to, loose material, such as aggregate, sand, soil or the like. The ejector trailer 10 comprises a base or floor 12 and side walls 14 and a front wall 16 extending from the base 12. The ejector trailer 10 also comprises a rear wall or door 18. The base 12, side walls 14, front wall 16, and rear wall 18 form a container or bin for holding and transporting the load. The ejector trailer 10 can also comprise a roof (not shown) to prevent the load from being dispersed, e.g. by air currents, as the load is transported. The roof may be a flexible material that is retractable as is known in the art.

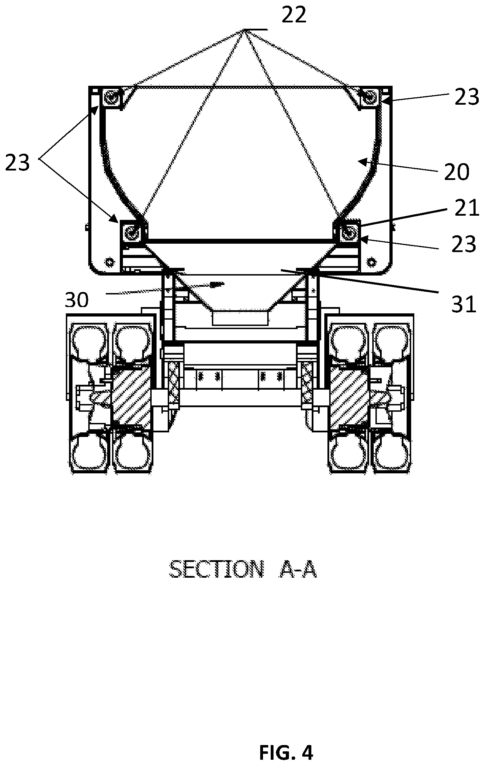

In some embodiments, the rear wall 18 extends from the base 12 and is joined to the side walls 14 and thus is fixed. In other embodiments, the rear wall or door 18 is hinged or pivotally coupled, for example, to the side walls 14, or otherwise at least partly openable, to allow the load to be ejected from the rear of the trailer. In the embodiments shown in FIGS. 1 and 2, the ejector trailer 10 comprises a chute 30 coupled to the base 12 at the rear of the trailer. An aperture 31 in the base 12 of the trailer, shown, for example in FIG. 4, allows the load 32 to be ejected through the chute 30, as will be described in more detail herein. The ejector trailer 10 comprises a chassis 19 to support the container and to couple the ejector trailer 10 to the prime mover 11 by a coupling mechanism known in the art. The ejector trailer is used for the transportation and controlled ejection of the load, for example, into another trailer, onto a conveyer 34, or into a bulk bag.

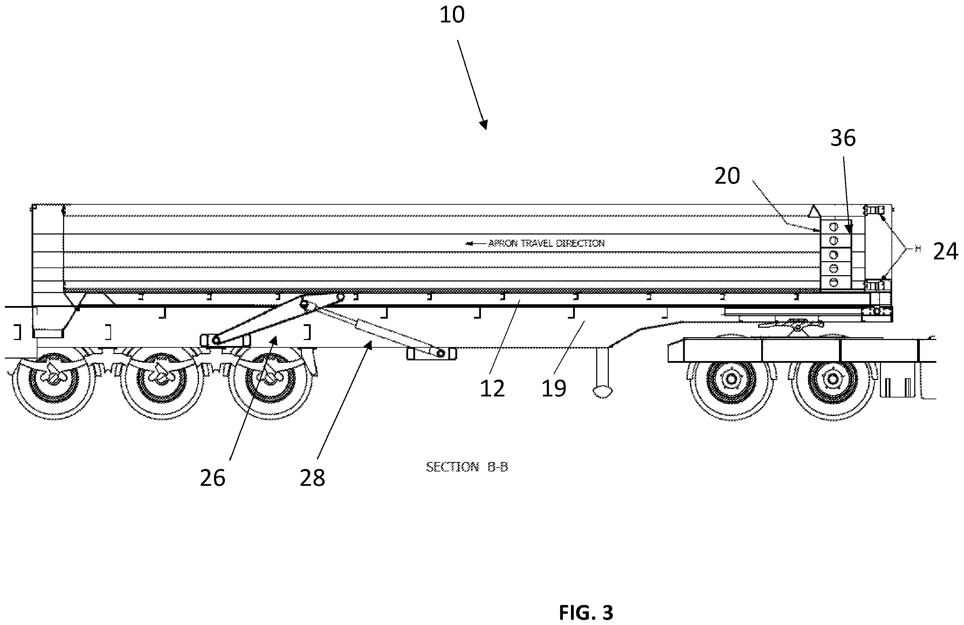

With additional reference to FIGS. 3 and 4, the ejector trailer 10 includes an apron 20 that spans substantially the internal width and height of the trailer. The apron 20 is moveable backwards and forwards along the entire length, or substantially the entire length of the trailer. The apron 20 is used to push the load along the trailer and out through the chute 30 or out through the rear door 18 according to the particular embodiment. Coupled to the apron 20 is a threaded rod 22 or a plurality of threaded rods 22 depending on the embodiment. In the embodiment shown in FIG. 4, four threaded rods 22 are coupled to the apron 20 and are located substantially at, or about a periphery of the apron 20, such as at, or about each corner of the apron 20 or trailer cross-section. Four threaded rods are used in a preferred embodiment to ensure sufficient force is imparted on the apron 20 to force the load along and out of the trailer 10 and to ensure even, longitudinal movement of the apron 20 along the trailer. According to different embodiments, the present invention can comprise two, three, or more than four threaded rods 22. For example, trailers having different capacities and/or different cross-sectional shapes can require a different number of threaded rods. For example, for a shallow trailer, a single threaded rod 22 on either side of the apron 20 may be sufficient. In some embodiments, the trailer may be tapered and have, for example, a substantially triangular cross-section such that a threaded rod 22 located at, or about each vertex, thus totalling three threaded rods, is sufficient. Other cross-sectional shapes of trailer requiring other numbers of threaded rods are also envisaged that nonetheless fall within the scope of the present invention.

The ejector trailer 10 comprises at least one drive mechanism coupled to the threaded rods 22 to rotate each threaded rod to move the apron 20 along the length of the trailer. In some embodiments, the drive mechanism is at least one hydraulic motor 24 which is coupled to a hydraulic system of the trailer 10 and/or prime mover 11. Alternatively, the drive mechanism is at least one electric motor coupled to an electrical system of the trailer 10 and/or prime mover 11. In the embodiment shown, a separate hydraulic motor 24 is coupled to each threaded rod 22. In other embodiments, a single hydraulic motor 24 drives more than one threaded rod 22.

The threaded rods 22 extend along the length of the trailer 10. The apron 20 comprises an apron boss 21 comprising a threaded aperture 23 for receiving therethrough a respective threaded rod 22. Hence, in the embodiment shown, the apron 20 comprises four apron bosses 21 comprising four respective threaded apertures 23. The hydraulic motors 24 rotate the threaded rods 22 to move the apron 20 along the length of the trailer 10. The threaded rods 22 are rotated in a first direction to move the apron in a rearward direction along the length of the trailer, as shown by the apron travel direction indicated in FIG. 1. The threaded rods 22 are rotated in a second direction to move the apron 20 in a forward direction along the length of the trailer 10, for example, once the load 32 has been ejected from the trailer. In some embodiments, the first direction is clockwise and the second direction is anti-clockwise. In other embodiments, the first direction is anti-clockwise and the second direction is clockwise. The threaded rods 22 are synchronously rotated to ensure even, longitudinal movement of the apron 20 along the trailer.

With particular reference to FIGS. 2 and 3, the trailer 10 comprises an elevating arm 26 pivotally coupled at, or towards one end thereof to the chassis 19 and pivotally coupled at, or towards the other, opposite end thereof to the base 12 of the trailer. A hydraulic ram 28 is pivotally coupled at, or towards one end thereof to the chassis 19 at a position forward of the elevating arm and is pivotally coupled at, or towards the other end thereof part way along the elevating arm 26 nearer the base 12 of the trailer. Extension of the hydraulic ram 28 causes upward pivoting movement of the elevating arm 26 which moves the trailer 10 in an upward direction and a rearward direction. Thus, the trailer 10 is moved into an out of level or rearwardly inclined and displaced position. The rearward displacement and out of level position of the trailer 10 allows for the load 32 in the trailer to be unloaded from trailer 10 to another trailer, conveyer, bulk bag or the like in a controlled manner through the chute 30 or rear door 18. Rather than the load 32 falling from the trailer 10 under gravity in an uncontrolled manner as with the prior art, the load 32 is pushed against gravity in a controlled and, if desired, quantized manner. The accuracy in dispensing the load 32 onto, for example, a conveyer 34 as shown in FIG. 2, is further improved by the chute 30 at the rear of the trailer 10, which deposits the load in an area smaller than the width of the trailer, as best illustrated in FIG. 4.

In some embodiments, the threaded rods 22 are accommodated within a housing 27 such that the threaded rods 22 do not contact the load 32 being transported in the trailer 10. In some embodiments, the housing comprises a slit to permit coupling of the apron boss 21 to the threaded rod 22 and to the apron 20. In such embodiments, a seal 29 is provided between the housing 27 and the apron 20 and/or the apron boss 21 that moves with the apron 20 and the apron boss 21.

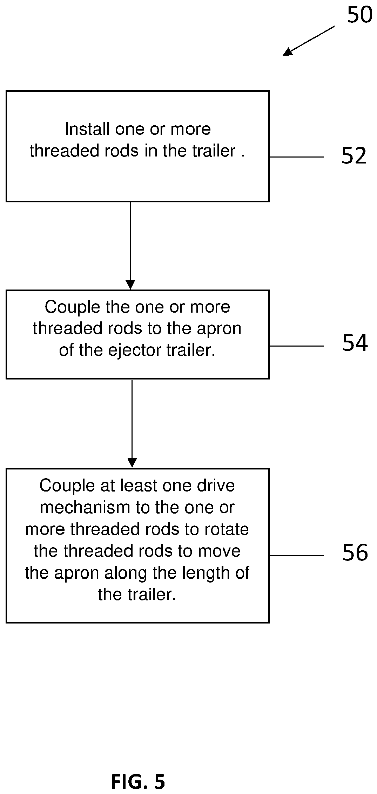

FIG. 5 refers to methods 50 of installing the ejector trailer system into an ejector trailer. At step 52, the method comprises installing the at least one threaded rod 22, or plurality of threaded rods 22, in the trailer 10, for example, substantially at, or about a periphery of the apron 20, such as at each corner of the trailer cross-section. At step 54, the method 50 comprises coupling the at least one threaded rod 22 to the apron 20 of the ejector trailer, such as via the threaded apertures 23 in the apron bosses 21. At step 56, the method comprises coupling at least one drive mechanism 24 to the at least one threaded rod 22 to rotate the at least one threaded rod 22 to move the apron 20 along the length of the trailer.

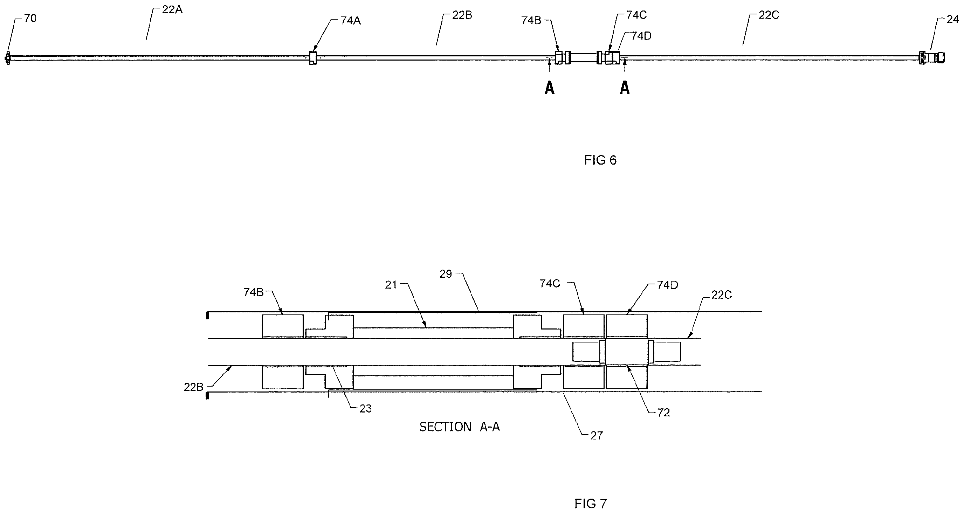

Further details regarding the threaded rods 22 and their operation according to some embodiments of the present invention will now be described with reference to FIGS. 6 to 8D.

Referring to FIG. 6, according to the invention, each threaded rod 22 comprises a plurality of threaded rod sections coupled together. In the example shown in FIG. 6, three threaded rod sections 22A, 22B, 22C are coupled together and extend along, or substantially along the length of the trailer 10 between the drive mechanism 24 at the forward end of the trailer 10 and a mount 70 in which the threaded rod 22 can rotate at the rearward end of the trailer 10. However, it will be appreciated that the present invention is not limited to the threaded rods 22 comprising three threaded rod sections. The number of threaded rod sections required will depend on, for example, the length of the trailer 10, the length of the threaded rod sections and the diameter of the threaded rod sections. According to the invention, each threaded rod 22 may comprise two threaded rod sections, three threaded rod sections, or more than three threaded rod sections. Hence, the threaded rod 22 is adaptable to any length of ejector trailer.

Referring to the enlarged view in FIG. 7, two adjacent threaded rod sections 22B, 22C are coupled together with a threadless rod joiner 72 received within hollow portions, such as hollow end portions, of the threaded rod sections 22B, 22C. Threaded rod section 22B is coupled to the apron 20 via threaded apertures 23 of the apron boss 21. Each threaded rod 22 comprises a plurality of stabiliser nuts or stay nuts 74 coupled thereto. In some embodiments, a number of stay nuts 74 on each threaded rod 22 is greater than a number of the threaded rod sections by a value of 1. In other words, there are n+1 stay nuts where n is the number of threaded rod sections and n ≠ 0. In the example shown in FIG. 6, threaded rod 22 comprises three threaded rod sections 22A, 22B, 22C and four stay nuts 74A, 74B, 74C, 74D. Each threaded rod 22 comprises a stay nut 74 at a location where two adjacent threaded rod sections are coupled together. In the embodiment shown in FIG. 6, threaded rod 22 comprises stay nut 74A at the joining location of adjacent threaded rod sections 22A, 22B and stay nut 74D at the joining location of adjacent threaded rod sections 22B, 22C. A stay nut is coupled to at least one of the threaded rod sections on each side of the apron boss 21 of the apron 20. With additional reference to the enlarged view in FIG.7, stay nut 74C is coupled to the threaded rod 22 on a first side of the apron boss 21 and stay nut 74B is coupled to the threaded rod 22 on a second side of the apron boss 21. Stay nut 74D is adjacent stay nut 74C.

In preferred embodiments, the stabiliser nuts or stay nuts 74 and the threaded rod 22 to which they are coupled are accommodated within and abut against a respective housing 27. The stay nuts 74 are movable along at least part of at least one of the threaded rod sections as the threaded rod 22 rotates. When the stabiliser or stay nuts 74 arrive at the location of the threadless rod joiner 72 the stabiliser or stay nuts 74 remain in that location and provide support and stabilisation for the threaded rod 22 as the apron 20 and apron boss 21 move away and along the threaded rod 22. The stabiliser or stay nuts 74 thus prevent flexing or bowing of the threaded rods and help eliminate, or at least reduce vibration. The number and location of the stabilisation points can be determined by number and location of the threadless rod joiners 72 according to the length of threaded rod sections and/or the length of the trailer.

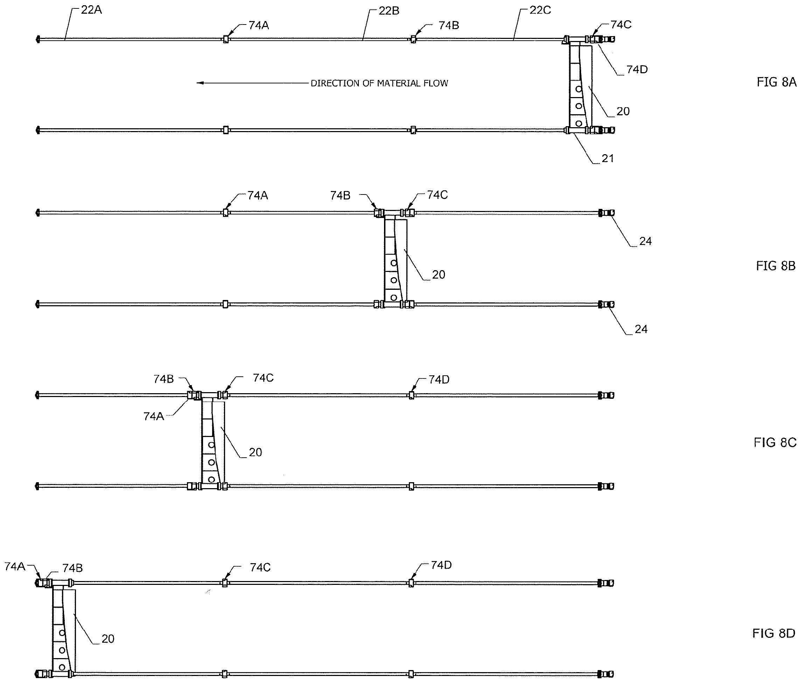

A sequence of movement of the stay nuts 74, apron bosses 21 and the apron 20 will now be described with reference to the plan views shown in FIGS. 8A to 8D, which show two threaded rods 22 of the ejector trailer 10, each comprising three threaded rod sections 22A, 22B, 22C. Apron 20 is coupled to the threaded rods 22 via apron bosses 21. Threaded rods 22 are rotated via respective drive mechanisms 24, such as hydraulic or electric motors at the front of the trailer on the right. The rear of the trailer is on the left. The sequence of movement of the stay nuts 74 and apron boss 21 will be described in relation to the upper threaded rod 22, which is emulated for the lower threaded rod 22 shown in FIG. 8A.

Referring to FIG. 8A, the apron 20 is located at the front of the trailer on the right. In relation to the upper threaded rod 22 shown in FIG. 8A, two stay nuts 74C, 74D are coupled to the threaded rod 22 on a first side, or forward side of the apron boss 21. Stay nut 74A is coupled to the threaded rod 22 at the joining location of adjacent threaded rod sections 22A, 22B and stay nut 74B is coupled to the threaded rod 22 at the joining location of adjacent threaded rod sections 22B, 22C. This arrangement is repeated for the lower threaded rod shown in FIG. 8A.

As the threaded rods 22 are rotated clockwise by the respective drive mechanisms 24, and with reference to FIG. 8B, the apron 20 is moved rearwardly along the trailer, i.e. to the left in FIG. 8B, which pushes the load rearwardly along the trailer. As the apron boss 21 and apron 20 attached thereto move along the threaded rod 22 past a first joining location where the two adjacent threaded rod sections 22B, 22C are coupled together, a first stay nut 74D of the two stay nuts 74C, 74D provided on the first side of the apron boss 21 remains at the first joining location, by virtue of the rod joiner 72 being threadless. The apron boss 21 shifts stay nut 74B from the threadless rod joiner 72 onto the thread of the threaded rod section 22B on the second, rearward side of the apron boss 21.

With reference to FIG. 8C, the apron 20 is moved further rearwardly along the trailer due to rotation of the threaded rods 22. As the apron 20 and apron boss 21 move further along the threaded rod 22 past a second joining location where two adjacent threaded rod sections 22A, 22B are coupled together, the second stay nut 74C of the two stay nuts 74C, 74D provided on the first side of the apron boss 21 remains at a second joining location by virtue of the rod joiner 72 being threadless. The apron boss 21 shifts stay nut 74A from the threadless rod joiner 72 onto the thread of the threaded rod section 22C on the second, rearward side of the apron boss 21.

With reference to FIG. 8D, the apron 20 is moved further rearwardly along the trailer to the end of the available amount of travel due to rotation of the threaded rods 22. Stay nuts 74A, 74B finish adjacent on the second, rearward side of the apron boss 21. It will be appreciated that driving the threaded rods 22 in an anticlockwise direction in this embodiment effects the aforementioned sequence in reverse moving the apron 20 in a forward direction ready for the trailer to receive another load.

Hence, in one form, the present invention resides in an ejector trailer 10 comprising an apron 20 movable along a length of the trailer; at least one threaded rod 22 coupled to the apron; and at least one drive mechanism 24 coupled to the at least one threaded rod to rotate the at least one threaded rod to move the apron along the length of the trailer.

In another form, the present invention resides in an ejector trailer control system comprising at least one threaded rod 22 for coupling to the apron 20 of the ejector trailer; and at least one drive mechanism 24 for coupling to the at least one threaded rod to rotate the at least one threaded rod to move the apron 20 along the length of the trailer.

In a further form, the present invention resides in a method comprising coupling at least one threaded rod 22 to the apron 20 of an ejector trailer; and coupling at least one drive mechanism 24 to the at least one threaded rod to rotate the at least one threaded rod to move the apron 20 along the length of the trailer.

It is envisaged that at least some known ejector trailers can be retrofitted with the ejector trailer control system in accordance with methods described herein.

Hence, the present invention addresses or at least ameliorates one or more of the aforementioned problems by providing an ejector trailer and an ejector trailer control system comprising one or more threaded rods 22 coupled to the apron 20 and to the drive mechanism 24 to move the apron 20 along the length of the trailer to eject the load from the trailer. The mechanism is simpler and more robust than at least some of the prior art thus requiring less maintenance. Accommodating the threaded rods 22 in respective housings 27 prevent the mechanism being fouled up by the load which helps reduce maintenance. Large capacity hydraulic systems or high power electric motors are not required, thus reducing cost associated with implementation and use, for example due to replacement of hydraulic fluid and/or power consumption. Furthermore, in the present invention, the drive mechanism, comprising electrical cables or hydraulic hoses is not connected directly to the apron 20. The threaded rods 22 comprising one or more threaded rod sections joined together means the present invention is adaptable to any length of trailer. Since the threaded rods run the length of the trailer, the pressure applied by the apron 20 on the load 32 in the trailer can be maintained throughout the length of the trailer. The apron can also be moved evenly along the full length of the trailer, thus preventing spreading or bowing of the container or bin. The stabiliser or stay nuts 74 provide support and stabilisation for the threaded rod 22 as the apron 20 and apron boss 21 move away and along the threaded rod 22. The stabiliser or stay nuts 74 thus prevent flexing or bowing of the threaded rods and help eliminate, or at least reduce vibration. The number and location of the stabilisation points can be determined by number and location of the threadless rod joiners 72 according to the length of threaded rod sections and/or the length of the trailer. The elevating arm 26 and hydraulic ram 28 that displaces the trailer rearwardly and into an inclined position provides more accurate control in ejecting the load from the trailer. This is enhanced by the use of the threaded rods 22 received within threaded apertures 23 of the apron bosses 21 of the apron 20, which enable accurate movement of the apron and controlled, quantised ejection of the load. Accuracy of ejection is further enhanced by the aperture in the base 12 of the trailer and the chute 30 which allows the load to be ejected into a more targeted area than is provided by at least some of the prior art ejector trailers.

In this specification, the terms "comprises", "comprising" or similar terms are intended to mean a non-exclusive inclusion, such that an apparatus that comprises a list of elements does not include those elements solely, but may well include other elements not listed.

## Claims

1. An ejector trailer (10) comprising:
an apron (20) movable along a length of the ejector trailer, the apron comprising a plurality of threaded apertures (23) at or about a periphery of the apron;
a plurality of threaded rods (22) coupled to a respective one of the plurality of threaded apertures of the apron; and
a drive mechanism (24) coupled to the plurality of threaded rods to rotate the threaded rods to move the apron along the length of the ejector trailer;
**characterized in that**
each threaded rod comprises a plurality of threaded rod sections (22A, 22B, 22C) coupled together, wherein two adjacent threaded rod sections are coupled together with a threadless rod joiner (72) received within hollow portions of the threaded rod sections.

2. A method comprising:
coupling a plurality of threaded rods (22) to respective threaded apertures (23) of an apron (20) of an ejector trailer (10); and
coupling at least one drive mechanism (24) to the plurality of threaded rods to rotate the threaded rods to move the apron along the length of the trailer;
wherein each threaded rod comprises a plurality of threaded rod sections (22A, 22B, 22C) coupled together, wherein two adjacent threaded rod sections are coupled together with a threadless rod joiner (72) received within hollow portions of the threaded rod sections.

3. The ejector trailer of claim 1, or the method of claim 2, wherein each threaded aperture (23) is provided in a respective apron boss (21) of the apron (20).

4. The ejector trailer or the method of any preceding claim, comprising four threaded rods (22) wherein one of the four threaded rods is located substantially at or about each corner of the trailer cross-section.

5. The ejector trailer or the method of any preceding claim, wherein:
the drive mechanism (24) is selected from one of the following: a hydraulic motor; an electric motor; and/or the trailer is pivotally coupled to an elevating arm (26) driven by a hydraulic ram (28) to move the trailer in a rearward direction and into an out of level or upwardly inclined position in the rearward direction; and/or
the rear of the ejector trailer contains an aperture (31) and optionally a chute (30) extending from the aperture for a load to exit from the ejector trailer.

6. The ejector trailer or the method of any preceding claim, wherein:
the threaded rods (22) are rotated in a first direction to move the apron in a rearward direction along the length of the ejector trailer (10) and the threaded rods are rotated in a second direction to move the apron (20) in a forward direction along the length of the ejector trailer; and/or
the threaded rods are accommodated within a housing (27) such that the threaded rods do not contact a material transported in the ejector trailer; and/or
the plurality of threaded rods is synchronously rotated for even, longitudinal movement of the apron along the trailer.

7. The ejector trailer or the method of any preceding claim, wherein each threaded rod (22) comprises a plurality of stabiliser or stay nuts (74) coupled thereto, in particular, wherein each threaded rod comprises a stabiliser or stay nut at a location where two adjacent threaded rod sections are coupled together; and/or
wherein a number of stabiliser or stay nuts on each threaded rod is greater than a number of the threaded rod sections by a value of 1; and/or
wherein the plurality of stabiliser or stay nuts is movable along at least part of at least one of the threaded rod sections (22A, 22B, 22C) as the threaded rod rotates; and/or
wherein the plurality of stabiliser or stay nuts is accommodated within and abut against the housing.

8. The ejector trailer or the method of claim 7, wherein a stabiliser or stay nut (74) is coupled to at least one of the threaded rod sections (22A, 22B, 22C) on each side of the apron boss (21) of the apron (20).

9. The ejector trailer or the method of claim 8, wherein two stabiliser or stay nuts (74) are provided on a first side of the apron boss (21) and a first one of the two stabiliser or stay nuts provided on the first side of the apron boss remains at a first joining location where two adjacent threaded rod sections (22A, 22B, 22C) are coupled together as the apron (20) moves along the threaded rod past the first joining location.

10. The ejector trailer or the method of claim 9, wherein a second one of the two stabiliser or stay nuts (74) provided on the first side of the apron boss (21) remains at a second joining location where two adjacent threaded rod sections are coupled together as the apron (20) moves further along the threaded rod past the second joining location.

11. The ejector trailer or the method of claim 6 or 7, wherein the housing (27) comprises a slit to permit coupling of the apron boss (21) to the threaded rod (22) and the apron (20), in particular, further comprising a seal (29) between the housing and the apron and/or the apron boss that moves with the apron and the apron boss.

## Patentansprüche

1. Auswerferanhänger (10), umfassend:
eine Schürze (20), die entlang einer Länge des Auswerferanhängers bewegbar ist, wobei die Schürze eine Vielzahl von Gewindeöffnungen (23) an oder um einen Umfang der Schürze herum umfasst;
eine Vielzahl von Gewindestangen (22), die mit einer jeweiligen der Vielzahl von Gewindeöffnungen der Schürze verbunden sind; und
einen Antriebsmechanismus (24), der mit der Vielzahl von Gewindestangen gekoppelt ist, um die Gewindestangen zu drehen, um die Schürze entlang der Länge des Auswerferanhängers zu bewegen;
**dadurch gekennzeichnet, dass**
jede Gewindestange eine Vielzahl von miteinander gekoppelten Gewindestangenabschnitten (22A, 22B, 22C) umfasst, wobei zwei benachbarte Gewindestangenabschnitte mit einem gewindelosen Stangenverbinder (72) miteinander gekoppelt sind, der in hohlen Teilen der Gewindestangenabschnitte aufgenommen ist.

2. Verfahren, umfassend:
Koppeln einer Vielzahl von Gewindestangen (22) mit jeweiligen Gewindeöffnungen (23) einer Schürze (20) eines Auswerferanhängers (10); und
Koppeln von mindestens einem Antriebsmechanismus (24) mit der Vielzahl von Gewindestangen, um die Gewindestangen zu drehen, um die Schürze entlang der Länge des Anhängers zu bewegen;
wobei jede Gewindestange eine Vielzahl von miteinander gekoppelten Gewindestangenabschnitten (22A, 22B, 22C) umfasst, wobei zwei benachbarte Gewindestangenabschnitte mit einem gewindelosen Stangenverbinder (72) miteinander gekoppelt sind, der in hohlen Teilen der Gewindestangenabschnitte aufgenommen ist.

3. Auswerferanhänger nach Anspruch 1 oder Verfahren nach Anspruch 2, wobei jede Gewindeöffnung (23) in einem jeweiligen Schürzenvorsprung (21) der Schürze (20) bereitgestellt ist.

4. Auswerferanhänger oder Verfahren nach einem der vorstehenden Ansprüche, umfassend vier Gewindestangen (22), wobei sich eine der vier Gewindestangen im Wesentlichen an jeder oder um jede Ecke des Anhängerquerschnitts befindet.

5. Auswerferanhänger oder Verfahren nach einem der vorstehenden Ansprüche, wobei:
der Antriebsmechanismus (24) aus einem der folgenden ausgewählt ist: einem Hydraulikmotor; einem Elektromotor; und/oder der Anhänger schwenkbar mit einem Hebearm (26) verbunden ist, der von einem Hydraulikzylinder (28) angetrieben wird, um den Anhänger in eine Rückwärtsrichtung und in eine aus der Waagerechten geratene oder nach oben geneigte Position in der Rückwärtsrichtung zu bewegen; und/oder
die Rückseite des Auswerferanhängers eine Öffnung (31) und optional eine von der Öffnung ausgehende Rutsche (30) aufweist, damit eine Ladung den Auswerferanhänger verlassen kann.

6. Auswerferanhänger oder Verfahren nach einem der vorstehenden Ansprüche, wobei:
die Gewindestangen (22) in eine erste Richtung gedreht werden, um die Schürze in einer Rückwärtsrichtung entlang der Länge des Auswerferanhängers (10) zu bewegen, und die Gewindestangen in eine zweite Richtung gedreht werden, um die Schürze (20) in einer Vorwärtsrichtung entlang der Länge des Auswerferanhängers zu bewegen; und/oder
die Gewindestangen so in einem Gehäuse (27) untergebracht sind, dass die Gewindestangen kein in dem Auswerferanhänger transportiertes Material berühren; und/oder
die Vielzahl der Gewindestangen für eine gleichmäßige Längsbewegung der Schürze entlang des Anhängers synchron gedreht wird.

7. Auswerferanhänger oder Verfahren nach einem der vorstehenden Ansprüche, wobei jede Gewindestange (22) eine Vielzahl von damit gekoppelten Stabilisator- oder Stehmuttern (74) umfasst, insbesondere wobei jede Gewindestange eine Stabilisator- oder Stehmutter an einer Stelle umfasst, an der zwei benachbarte Gewindestangenabschnitte miteinander gekoppelt sind; und/oder
wobei eine Anzahl der Stabilisator- oder Stehmuttern auf jeder Gewindestange um einen Wert von 1 größer ist als eine Anzahl der Gewindestangenabschnitte; und/oder
wobei die Vielzahl von Stabilisator- oder Stehmuttern entlang mindestens eines Teils von mindestens einem der Gewindestangenabschnitte (22A, 22B, 22C) bewegbar ist, wenn sich die Gewindestange dreht; und/oder
wobei die Vielzahl von Stabilisator- oder Stehmuttern in dem Gehäuse untergebracht ist und an diesem anliegt.

8. Auswerferanhänger oder Verfahren nach Anspruch 7, wobei eine Stabilisator- oder Stehmutter (74) mit mindestens einem der Gewindestangenabschnitte (22A, 22B, 22C) auf jeder Seite des Schürzenvorsprungs (21) der Schürze (20) gekoppelt ist.

9. Auswerferanhänger oder Verfahren nach Anspruch 8, wobei zwei Stabilisator- oder Stehmuttern (74) auf einer ersten Seite des Schürzenvorsprungs (21) bereitgestellt sind und eine erste der zwei Stabilisator- oder Stehmuttern, die auf der ersten Seite des Schürzenvorsprungs bereitgestellt sind, an einer ersten Verbindungsstelle verbleibt, an der zwei benachbarte Gewindestangenabschnitte (22A, 22B, 22C) miteinander gekoppelt werden, wenn sich die Schürze (20) entlang der Gewindestange an der ersten Verbindungsstelle vorbei bewegt.

10. Auswerferanhänger oder Verfahren nach Anspruch 9, wobei eine zweite der beiden Stabilisator- oder Stehmuttern (74), die auf der ersten Seite des Schürzenvorsprungs (21) bereitgestellt sind, an einer zweiten Verbindungsstelle verbleibt, an der zwei benachbarte Gewindestangenabschnitte miteinander gekoppelt werden, wenn sich die Schürze (20) weiter entlang der Gewindestange an der zweiten Verbindungsstelle vorbei bewegt.

11. Auswerferanhänger oder Verfahren nach Anspruch 6 oder 7, wobei das Gehäuse (27) einen Schlitz umfasst, um ein Koppeln des Schürzenvorsprungs (21) mit der Gewindestange (22) und der Schürze (20) zu ermöglichen, insbesondere ferner eine Dichtung (29) zwischen dem Gehäuse und der Schürze und/oder dem Schürzenvorsprung umfassend, die sich mit der Schürze und dem Schürzenvorsprung bewegt.

## Revendications

1. Remorque à éjecteur (10) comprenant :
un tablier (20) mobile le long d'une longueur de la remorque à éjecteur, le tablier comprenant une pluralité d'ouvertures filetées (23) au niveau ou autour d'une périphérie du tablier ;
une pluralité de tiges filetées (22) accouplées à une ouverture respective parmi la pluralité d'ouvertures filetées du tablier ; et
un mécanisme d'entraînement (24) accouplé à la pluralité de tiges filetées pour faire tourner les tiges filetées afin de déplacer le tablier le long de la longueur de la remorque à éjecteur ;
**caractérisé en ce que**
chaque tige filetée comprend une pluralité de sections de tige filetée (22A, 22B, 22C) accouplées les unes aux autres, dans lequel deux sections de tige filetée adjacentes sont accouplées l'une à l'autre à l'aide d'un raccord de tige non filetée (72) reçu à l'intérieur de parties creuses des sections de tige filetée.

2. Procédé comprenant :
l'accouplement d'une pluralité de tiges filetées (22) à des ouvertures filetées respectives (23) d'un tablier (20) d'une remorque à éjecteur (10) ; et
l'accouplement d'au moins un mécanisme d'entraînement (24) à la pluralité de tiges filetées pour faire tourner les tiges filetées afin de déplacer le tablier le long de la longueur de la remorque ;
dans lequel chaque tige filetée comprend une pluralité de sections de tige filetée (22A, 22B, 22C) accouplées les unes aux autres, dans lequel deux sections de tige filetée adjacentes sont accouplées l'une à l'autre à l'aide d'un raccord de tige non filetée (72) reçu à l'intérieur de parties creuses des sections de tige filetée.

3. Remorque à éjecteur selon la revendication 1, ou procédé selon la revendication 2, dans lequel chaque ouverture filetée (23) est pourvue dans un bossage de tablier respectif (21) du tablier (20).

4. Remorque à éjecteur ou procédé selon l'une quelconque revendication précédente, comprenant quatre tiges filetées (22) dans lequel l'une parmi les quatre tiges filetées est située essentiellement au niveau ou autour de chaque coin de la section transversale de remorque.

5. Remorque à éjecteur ou procédé selon l'une quelconque revendication précédente, dans lequel :
le mécanisme d'entraînement (24) est sélectionné parmi l'un des éléments suivants : un moteur hydraulique ; un moteur électrique ; et/ou la remorque est accouplée de manière pivotante à un bras élévateur (26) entraîné par un vérin hydraulique (28) pour déplacer la remorque dans une direction arrière et dans une position hors niveau ou inclinée vers le haut dans la direction arrière ; et/ou
l'arrière de la remorque à éjecteur contient une ouverture (31) et éventuellement une goulotte (30) s'étendant à partir de l'ouverture pour permettre à une charge de sortir de la remorque à éjecteur.

6. Remorque à éjecteur ou procédé selon l'une quelconque revendication précédente, dans lequel :
les tiges filetées (22) sont tournées dans une première direction pour déplacer le tablier dans une direction arrière le long de la longueur de la remorque à éjecteur (10) et les tiges filetées sont tournées dans une seconde direction pour déplacer le tablier (20) dans une direction avant le long de la longueur de la remorque à éjecteur ; et/ou
les tiges filetées sont logées à l'intérieur d'un boîtier (27) de sorte que les tiges filetées n'entrent pas en contact avec un matériau transporté dans la remorque à éjecteur ; et/ou
la pluralité de tiges filetées est tournée de manière synchronisée pour assurer un mouvement longitudinal régulier du tablier le long de la remorque.

7. Remorque à éjecteur ou procédé selon l'une quelconque revendication précédente, dans lequel chaque tige filetée (22) comprend une pluralité d'écrous stabilisateurs ou de contre-écrous (74) accouplés à celle-ci, en particulier, dans lequel chaque tige filetée comprend un écrou stabilisateur ou un contre-écrou au niveau d'un emplacement où deux sections de tige filetée adjacentes sont accouplées l'une à l'autre ; et/ou
dans lequel un nombre d'écrous stabilisateurs ou de contre-écrous sur chaque tige filetée est supérieur à un nombre des sections de tige filetée d'une valeur de 1 ; et/ou
dans lequel la pluralité d'écrous stabilisateurs ou de contre-écrous est mobile le long d'au moins une partie d'au moins l'une parmi les sections de tige filetée (22A, 22B, 22C) au fur et à mesure que la tige filetée tourne ; et/ou
dans lequel la pluralité d'écrous stabilisateurs ou de contre-écrous est logée à l'intérieur du boîtier et vient en butée contre celui-ci.

8. Remorque à éjecteur ou procédé selon la revendication 7, dans lequel un écrou stabilisateur ou contre-écrou (74) est accouplé à au moins l'une parmi les sections de tige filetée (22A, 22B, 22C) de chaque côté du bossage de tablier (21) du tablier (20).

9. Remorque à éjecteur ou procédé selon la revendication 8, dans lequel deux écrous stabilisateurs ou contre-écrous (74) sont pourvus sur un premier côté du bossage de tablier (21) et un premier parmi les deux écrous stabilisateurs ou contre-écrous pourvus sur le premier côté du bossage de tablier reste au niveau d'un premier emplacement de jonction où deux sections de tige filetée adjacentes (22A, 22B, 22C) sont accouplées l'une à l'autre au fur et à mesure que le tablier (20) se déplace le long de la tige filetée au-delà du premier emplacement de jonction.

10. Remorque à éjecteur ou procédé selon la revendication 9, dans lequel un second parmi les deux écrous stabilisateurs ou contre-écrous (74) pourvus sur le premier côté du bossage de tablier (21) reste au niveau d'un second emplacement de jonction où deux sections de tige filetée adjacentes sont accouplées l'une à l'autre au fur et à mesure que le tablier (20) se déplace davantage le long de la tige filetée au-delà du second emplacement de jonction.

11. Remorque à éjecteur ou procédé selon la revendication 6 ou 7, dans lequel le boîtier (27) comprend une fente pour permettre l'accouplement du bossage de tablier (21) à la tige filetée (22) et au tablier (20), en particulier, comprenant en outre un joint (29) entre le boîtier et le tablier et/ou le bossage de tablier qui se déplace avec le tablier et le bossage de tablier.
